# EUROPÄISCHE PATENTANMELDUNG

(11) **EP 4 530 507 A1**
(43) Veröffentlichungstag der Anmeldung: **02.04.2025**
(21) Anmeldenummer: 24194600.3
(22) Anmeldetag: 14.08.2024
(51) Int. Cl.: F16K 5/06

(54) **MONTAGESYSTEM FÜR EINE DICHTUNGSVORRICHTUNG, DICHTUNGSVORRICHTUNG SOWIE EIN VERFAHREN ZUR HERSTELLUNG EINER SOLCHEN DICHTUNGSVORRICHTUNG**

(30) Priorität: 29.09.2023 DE 102023126686
(71) Anmelder: Illinois Tool Works, Inc., Glenview, Illinois 60025 (US)
(72) Erfinder: Bartonek, Norbert, Glenview, Illinois, 60025 (US)
(74) Vertreter: HGF

(57) **Zusammenfassung**

Erfindungsgemäß ist ein Montagesystem für eine Dichtungsvorrichtung (1) einer Kugelventilvorrichtung (23) vorgesehen. Diese umfasst eine Dichtungsvorrichtung (1), wobei die Dichtungsvorrichtung (1) eine Gehäuseeinrichtung (4) aus einer Hartkomponente und eine Dichteinrichtung (5) aus einer Weichkomponente aufweist,
eine Montagevorrichtung mit einem sich in einer Axialrichtung (6) erstreckenden Montagestößel (19), wobei der Montagestößel (19) eine Verschlusskörperanschlagfläche (26) zum insbesondere axialen Anliegen an einem Verschlusskörper (24) einer Kugelventilvorrichtung (23) und eine Dichtungsanschlagfläche (27) zum insbesondere axialen Anliegen an der Dichtungsvorrichtung (1) aufweist, sodass die Dichtungsvorrichtung (1) in einem vorbestimmten Abstand zu einem Verschlusskörper (24) anordbar ist.

## Beschreibung

Die vorliegende Erfindung betrifft ein Montagesystem für eine Dichtungsvorrichtung, eine Dichtungsvorrichtung sowie ein Verfahren zur Herstellung einer solchen Dichtungsvorrichtung.

Kühlmittelventile werden in Kühlkreisläufen von Fahrzeugen, wie PKW oder LKW eingesetzt. Sie dienen zum Beispiel zum Kühlen eines Verbrennungsmotors. Abhängig von der Stellung des Ventilelements wird zum Beispiel Kühlflüssigkeit, während einer Aufwärm-phase des Verbrennungsmotors über eine Bypassleitung an einem Kühler vorbeigeleitet und nach Erreichen der Betriebstemperatur durch den Kühler geleitet. Es ist bei Kühlmittelventilen abhängig von der Anwendung auch möglich, dass Kühlmittel nur temporär durch das Kühlmittelventil fließt, beispielsweise wenn in der Kaltstartphase eines Verbrennungsmotors der Kühlmittelfluss vollständig unterbunden wird. Die Steuerung des Ventilelements kann selbsttätig erfolgen, beispielsweise über Dehnstoffelemente. Es sind aber auch elektrische Antriebe zum Verstellen des Ventilelements möglich, die von einer Steuereinrichtung angesteuert werden.

Zum Abdichten der Kühlmittelanschlüsse gegenüber dem Ventilelement sind beispielsweise ringförmige Dichtungsanordnungen vorgesehen, die einerseits dichtend an dem Gehäuse, insbesondere dem den Kühlmittelanschluss begrenzenden Gehäuseabschnitt, und andererseits dichtend an dem Ventilelement anliegen.

Ein Kühlmittelventil mit einer solchen Dichtungsanordnung ist zum Beispiel bekannt aus EP 2 052 177 B1. Das dort beschriebene Thermostatventil besitzt ein kugelschalenförmiges Ventilelement, wobei die Dichtungsanordnung einen Gleitring aus gleitfähigem festen Kunststoff aufweist, der von einem elastomeren Dichtring gegen das Ventilelement vorgespannt ist. Der Gleitring kann zum Beispiel aus PPS (Polyphenylensulfid) oder PTFE (Polytetrafluorethylen) bestehen und der elastomere Dichtring zum Beispiel aus EPDM (Ethylen-Propylen-DienKautschuk). Mit dem bekannten Thermostatventil kann eine jederzeit zuverlässige Abdichtung erreicht werden. Allerdings sind mit der bekannten Dichtungsanordnung nicht unerhebliche Kosten verbunden.

Aus der DE 10 2018 117 240 A1 geht ein Kühlmittelventil für ein Fahrzeug hervor. Dieses umfasst ein Gehäuse mit mehreren Kühlmittelanschlüssen und ein in dem Gehäuse zum Verbinden oder Trennen von Kühlmittelanschlüssen verstellbar angeordnetes Ventilelement, sowie mindestens eine im Bereich mindestens eines Kühlmittelanschlusses angeordnete Dichtungsanordnung, die einerseits dichtend an dem Gehäuse und andererseits dichtend an dem Ventilelement anliegt. Das Kühlmittelventil zeichnet sich dadurch aus, dass die Dichtungsanordnung ein Trägerelement aus einem ersten Material und ein Dichtelement aus einem zweiten Material aufweist, wobei das zweite Material weicher ist als das erste Material, dass das Dichtelement eine an dem Ventilelement anliegende erste Dichtlippe und das Trägerelement einen Stützabschnitt aufweist, wobei die erste Dichtlippe mit einem freien Ende über den Stützabschnitt vorsteht, und wobei die erste Dichtlippe bei einem Kühlmittelfluss durch das Kühlmittelventil an den Stützabschnitt angedrückt wird.

Ein Problem bekannter Dichtungsanordnungen von Kühlmittelventilen liegt darin, dass ein Zielkonflikt besteht zwischen einem zuverlässiges Anlegen der Dichtungsanordnung an das Ventilelement und damit einer sicheren Abdichtung auch bei geringem Systemdruck einerseits, sowie einer großen Belastbarkeit und einem geringen Ausweichen bei hohem Druck bei geringen Reibmomenten und damit geringen Antriebsmomenten für das Ventilelement andererseits.

Verschlusselemente bzw. -körper für Ventile, insbesondere für Kugelventile, unterliegen meist einer gewissen Montage- und/oder Fertigungstoleranz. Dies kann zu Problemen beim Abdichten von Anschlüssen des Kugelventils führen, da eine entsprechende Dichtung zum einen abdichtend am Verschlusselement des Kugelventils anliegen soll und zum anderen ein Anpressdruck einer solchen Dichtung nicht zu hoch sein darf, um die Kräfte zum Betätigen des Verschlusskörpers nicht unnötig zu erhöhen.

Aufgabe der vorliegenden Erfindung ist es, ein Montagesystem für eine Dichtungsvorrichtung für eine Kugelventilvorrichtung, eine Dichtungsvorrichtung und ein entsprechendes Verfahren zur Montage bereitzustellen, die einen Toleranzausgleich zwischen einer Verschlusskörperdichtung und einem Verschlusskörpers ermöglichen.

Eine weitere Aufgabe der vorliegenden Erfindung ist es, ein Montagesystem für eine Dichtungsvorrichtung für eine Kugelventilvorrichtung, eine Dichtungsvorrichtung und ein entsprechendes Verfahren zur Montage vorzusehen, die eine einfache Montage und dennoch ein abdichtendes Anliegen einer Verschlusskörperdichtung an einem Verschlusskörper einer Kugelventilvorrichtung ermöglichen.

Zudem besteht eine Aufgabe der vorliegenden Erfindung darin, ein Montagesystem für eine Dichtungsvorrichtung, eine Dichtungsvorrichtung und ein entsprechendes Verfahren zur Montage auszubilden, die sicher und zuverlässig im Betrieb sind und eine Alternative zum Stand der Technik darstellen.

Eine oder mehrere dieser Aufgaben werden durch die Merkmale der unabhängigen Patentansprüche 1, 7 und 8 gelöst. Vorteilhafte Ausgestaltungen sind in den davon abhängigen Unteransprüchen angegeben.

Erfindungsgemäß ist ein Montagesystem für eine Dichtungsvorrichtung einer Kugelventilvorrichtung vorgesehen. Diese umfasst
eine Dichtungsvorrichtung, wobei die Dichtungsvorrichtung eine Gehäuseeinrichtung aus einer Hartkomponente und eine Dichteinrichtung aus einer Weichkomponente aufweist,
eine Montagevorrichtung mit einem sich in einer Axialrichtung erstreckenden Montagestößels, wobei der Montagestößel eine Verschlusskörperanschlagfläche zum Anliegen an einem Verschlusskörper einer Kugelventilvorrichtung und eine Dichtungsanschlagfläche zum Anliegen an der Dichtungsvorrichtung aufweist, sodass die Dichtungsvorrichtung in einem vorbestimmten Abstand zu einem Verschlusskörper anordbar ist.

Dem erfindungsgemäßen Montagesystem sowie der erfindungsgemäßen Dichtungsvorrichtung liegt das Prinzip zugrunde, dass das Verschlusskörper-Dichtelement der Dichtungsvorrichtung von außen an einen Verschlusskörper bzw. an eine Kugel einer Kugelventilvorrichtung gedrückt wird, um diese zu montieren, ohne dass die Dichtungsvorrichtung selbst ventilseitig Mittel zur Position genauen axialen Positionierung aufweist bzw. frei von Mitteln zur axialen ortsfesten Positionierung ist.

Insbesondere ist hierfür das erfindungsgemäße Montagesystem mit einer erfindungsgemäßen Montagevorrichtung mit einem Montagestößel vorgesehen.

Der Montagestößel zeichnet sich dadurch aus, dass er eine Verschlusskörperanschlagfläche aufweist, die, wenn sie an einem Verschlusskörper einer Kugelventilvorrichtung anliegt, eine einfach reproduzierbare und immer gleichbleibende Positionierung der Dichtungsvorrichtung gegenüber einem Verschlusskörper einer Kugelventilvorrichtung ermöglicht.

Der Montagestößel kann eine Verschlusskörperanschlagfläche zum axialen Anliegen an einem Verschlusskörper einer Kugelventilvorrichtung und eine Dichtungsanschlagfläche zum axialen Anliegen an der Dichtungsvorrichtung aufweisen, sodass die Dichtungsvorrichtung in einem vorbestimmten Abstand zu einem Verschlusskörper anordbar ist.

In diesem Fall zeichnet sich der Montagestößel dann dadurch aus, dass er eine Verschlusskörperanschlagfläche aufweist, die, wenn sie in axialer Richtung an einem Verschlusskörper einer Kugelventilvorrichtung anliegt, eine einfach reproduzierbare und immer gleichbleibende Positionierung der Dichtungsvorrichtung gegenüber einem Verschlusskörper einer Kugelventilvorrichtung ermöglicht.

Auf diese Weise liegt die Dichteinrichtung immer mit einem gleichen Anpressdruck an einem Verschlusskörper einer Kugelventilvorrichtung oder mit einem immergleichen Einbaumaß relativ zu einem Verschlusskörper einer Kugelventilvorrichtung, insbesondere in Axialrichtung, vor.

Somit ist mit dem erfindungsgemäßen System ein Toleranzausgleich zwischen einem Verschlusskörper einer Kugelventilvorrichtung und der Dichtungsvorrichtung, insbesondere in axialer Richtung, möglich um eine immer wieder reproduzierbares Montageposition der Dichtungsvorrichtung gegenüber einem Verschlusskörper zu erzielen.

Weiterhin kann der Montagestößel eine Dichtungsanschlagfläche zum axialen Anliegen, an der, insbesondere aus einer Hartkomponente ausgebildeten, Gehäuseeinrichtung der Dichtungsvorrichtung aufweisen.

Durch das Vorsehen von zwei Anschlagflächen, wobei eine erste Anschlagfläche an der zu montierenden Dichtungsvorrichtung, insbesondere im Bereich der Hauptkomponente der Gehäuseeinrichtung der Dichtungsvorrichtung ausgebildet ist, und durch die Verschlusskörper-Anschlagfläche, die in Axialrichtung versetzt zueinander angeordnet sind, ist eine immer gleichbleibende Positionierung der Dichtungsvorrichtung bezüglich einem Verschlusskörper einer Kugelventilvorrichtung möglich.

Die vorliegende Erfindung ist nicht nur für rotationssymmetrische Verschlusskörper von Kugelventilvorrichtungen, sondern auch für exzentrisch gelagerte Verschlusskörper von Kugelventilvorrichtungen geeignet und kann ein immer gleiches Einbaumaß sicher und zuverlässig gewährleisten.

Hierdurch wird sicher und zuverlässig gewährleistet, dass das Verschlusskörperdichtelement immer mit einem gleichen Anpressdruck am Verschlusskörper der Kugelventilvorrichtung abdichtend anliegt bzw. dass das Verschlusskörperdichtelement immer ein exakt definiertes gleiches Einbaumaß bezüglich eines Verschlusskörpers und nicht bezüglich eines Gehäuses aufweist.

Die Dichtungsanschlagfläche kann sich orthogonal zur Axialrichtung erstrecken und als eine tangential umlaufende kreisringförmige Fläche ausgebildet sein, die an einem Randbereich des Montagestößels angeordnet ist.

Dadurch, dass die Dichtungsanschlagfläche tangential umlaufend und kreisringförmig ausgebildet ist, wird sicher und zuverlässig gewährleistet, dass eine entsprechende Hartkomponente der Gehäuseeinrichtung der Dichtungsvorrichtung mit einer gleichmäßigen Kraft in Axialrichtung beaufschlagbar ist und keinerlei Kippmomente auftreten, die zu einer gegenüber der Axialrichtung schiefen bzw. geneigten Einbauposition einer entsprechenden Dichtungsvorrichtung führen würde.

Die Verschlusskörperoberfläche kann sich ebenfalls orthogonal zur Axialrichtung erstrecken und als eine kreisscheibenförmige Fläche ausgebildet sein, die zentral am Montagestößel angeordnet sein kann.

Die kreisscheibenförmige Fläche der Verschlusskörperanschlagfläche ist vorzugsweise eben ausgebildet, sodass sie sich orthogonal zur Axialrichtung erstreckt. Unter bestimmten Umständen kann hier aber auch eine konkave oder eine konvexe oder eine in der Draufsicht rechteckförmige oder quadratische Ausbildung der Verschlusskörperanschlagfläche vorteilhaft sein.

Dadurch dass sich die Verschlusskörperoberfläche orthogonal zur Axialrichtung erstreckt und dabei eine zumeist konvex bzw. kugelförmig ausgebildete Oberfläche eines Verschlusskörpers nur in einem sehr geringen Bereich kontaktiert, ist eine exakte Positionierung der Dichtungsvorrichtung möglich. Ein entsprechender Abschnitt an einem Verschlusskörper wird im Folgenden als zweite Anschlagfläche bezeichnet.

Die Verschlusskörperoberfläche kann ein freies Ende des Montagestößels in Axialrichtung bilden, und wobei die Dichtungsfläche gegenüber der Verschlusskörperanschlagfläche in Axialrichtung zurückversetzt sein kann.

Insbesondere müssen die Verschlusskörperanschlagfläche und die Dichtungsanschlagfläche derart ausgebildet sein, dass zunächst die Gehäuseeinrichtung der Dichtungsvorrichtung mittels des Montagestößels kontaktiert wird, dieser dann in Axialrichtung verschiebbar ist und im Anschluss daran in einer Endmontageposition die Verschlusskörperanschlagfläche den zweiten Anschlagabschnitt des Verschlusskörpers kontaktiert.

Weiterhin kann der Montagestößel einen Aufnahmeabschnitt zum Aufnehmen der Dichtungsvorrichtung aufweisen.

Ein solcher Aufnahmeabschnitt ist insbesondere kreiszylindrisch ausgebildet, sodass die Dichtungsvorrichtung auf diesem anordbar ist.

Hieraus ergibt sich der Vorteil, dass die Dichtungsvorrichtung nicht manuell zunächst in einem Gehäuse eine Kugelventilvorrichtung angeordnet werden muss und in einem zweiten Schritt mittels des Montagestößel in ihre Endposition angeordnet wird, sondern dass in einem einzigen Montageschritt eine entsprechende Dichtungsvorrichtung in einem Gehäuse einer Kugelventilvorrichtung montierbar ist.

Das Radialdichtelement kann kreisringförmig ausgebildet sein und zumindest eine oder zwei oder drei in Axialrichtung hintereinander angeordnete sich in radialer Richtung nach außen erstreckende und radial umlaufend ausgebildete Dichtlippen aufweisen.

Weiterhin ist eine erfindungsgemäße Dichtungsvorrichtung vorgesehen, die die Gehäuseeinrichtung aus einer Hartkomponente und eine Dichteinrichtung aus einer Weichkomponente aufweist. Die Dichtungsvorrichtung kann insbesondere kreisringförmig ausgebildet sein. Weiterhin kann die Dichteinrichtung umfassen: ein an einer Ventilseite der Dichteinrichtung angeordnetes Verschlusskörper-Dichtelement zum abdichtenden Anliegen an einem Verschlusskörper einer Kugelventilvorrichtung, und ein sich in radialer und/oder in axialer Richtung erstreckendes Axial- oder Radialdichtelement zum Abdichten gegenüber einem Gehäuse einer Kugelventilvorrichtung.

Das Radialdichtelement kann kreisringförmig ausgebildet sein und zumindest eine oder zwei oder drei in Axialrichtung hintereinander angeordnete, sich in radialer Richtung nach außen erstreckende und radial bzw. tangential umlaufend ausgebildete Dichtlippen aufweisen.

Die Vorteile des Radialdichtelements werden im Folgenden anhand von zwei Ausführungsbeispielen einer erfindungsgemäßen Dichtungsvorrichtung näher beschrieben, die analog für das Radialdichtelement zutreffen.

Weiterhin kann die Gehäuseeinrichtung eine Rasteinrichtung zum Verbinden mit einem Gehäuse einer Kugelventilvorrichtung aufweisen.

Entsprechende Rastelemente und auch Toleranzausgleichsabschnitte wie sie im Folgenden noch anhand eines dritten und eines vierten Ausführungsbeispiels beschrieben sind können auch in gleicher Weise für das erste und das zweite Ausführungsbeispiel vorgesehen sein. Die technischen Merkmale der Ausführungsbeispiele der vorliegenden Erfindung sind somit beliebig miteinander kombinierbar. Die Rastelemente und/oder Toleranzausgleichsabschnitte sind Konturen, welche die Position der Dichtungsvorrichtung auch sicherstellen können, wenn das Montagesystem aus einem Ventil entfernt ist. Mittels der Rastelemente kann das Dichtelement durch "Klemmen" bzw. durch "Kriechen" des weicheren Gehäusewerkstoffes, in seiner Position fixiert werden.

Zudem kann die Dichtungsvorrichtung derart ausgebildet sein, dass nur das Radialdichtelement oder nur das Axial-Dichtelement oder beide Dichtelemente zum Abdichten gegenüber einem Gehäuse einer Kugelventilvorrichtung vorgesehen sind. Die Rasteinrichtung kann flexible Rastarme mit daran angeformten und sich in radialer Richtung nach außen erstreckenden Rastelementen aufweisen.

Die Merkmale der erfindungsgemäßen Dichtungsvorrichtung sind mit den weiteren Ausführungsbeispielen der erfindungsgemäßen Dichtungsvorrichtung, die nachfolgend beschrieben werden, solange sofern technisch möglich und sinnvoll, beliebig miteinander kombinierbar.

Weiterhin ist erfindungsgemäß ein Verfahren zur Montage einer Dichtungsvorrichtung mit einem Montagesystem für eine Dichtungsvorrichtung einer Kugelventilvorrichtung, wie vorstehend beschrieben, vorgesehen. Dieses Verfahren umfasst die folgenden Schritte: Anordnen einer Dichtungsvorrichtung in einem Gehäuse einer Kugelventilvorrichtung, Anordnen eines Montagestößel einer Montagvorrichtung an einer Gehäuseseite der Dichteinrichtung,
Kontaktieren einer Dichtungsanschlagfläche an einer in etwa korrespondierend ausgebildeten ersten Anschlagfläche der Dichteinrichtung durch Beaufschlagen des Montagestößel mit einer in Axialrichtung wirkenden Kraft,
Beaufschlagen des Montagestößels mit einer in Axialrichtung wirkenden Kraft bis eine Verschlusskörperanschlagfläche an einer Oberfläche eines Verschlusskörpers der Kugelventilvorrichtung anschlägt, wobei dieser Abschnitt des Verschlusskörpers als zweite Anschlagfläche bezeichnet wird, und wobei in diesem Moment der Montagestößel nicht mehr mit einer in Axialrichtung wirkenden Kraft beaufschlagt wird, und wobei dabei eine Endmontageposition der Dichteinrichtung erreicht ist.

Die Vorteile des erfindungsgemäßen Verfahrens entsprechen analog den vorstehend anhand des erfindungsgemäßen Montagesystems beschriebenen Vorteilen.

Insbesondere kann vorgesehen sein, dass die Dichtungsvorrichtung zunächst auf einem Aufnahmeabschnitt des Montagestößels angeordnet wird, bevor diese in ein Gehäuse einer Kugelventilvorrichtung eingebracht wird.

Erfindungsgemäß ist eine Dichtungsvorrichtung für eine Kugelventilvorrichtung vorgesehen. Diese weist eine Gehäuseeinrichtung aus einer Hartkomponente und eine Dichteinrichtung aus einer Weichkomponente auf. Die Dichteinrichtung umfasst
ein an einer Ventilseite der Dichteinrichtung angeordnetes Verschlusskörperdichtelement zum abdichtenden Anliegen an einem Verschlusskörper einer Kugelventilvorrichtung, und ein sich in radialer Richtung nach außen erstreckendes Radialdichtelement zum radialen Abdichten gegenüber, insbesondere einem rohrförmigen Anschluss, eines Gehäuses einer Kugelventilvorrichtung.

Mittels des Radialdichtelements ist eine sichere und zuverlässige Abdichtung eines Verschlusskörpers einer Kugelventilvorrichtung gegenüber einem rohrförmigen Anschluss eines Gehäuses einer Kugelventilvorrichtung gewährleistet.

Dadurch, dass das sich in radialer Richtung nach außen erstreckende Radialdichtelement zum radialen Abdichten gegenüber einer Gehäuseeinrichtung einer Kugelventilvorrichtung vorgesehen ist, lässt sich die Dichtungsvorrichtung in Axialrichtung bzw. in und/oder entgegen einer Durchströmungsrichtung relativ frei positionieren bzw. variabel in der Gehäuseeinrichtung anordnen, solange ein abdichtendes Anliegen an einem Verschlusskörper gewährleistet ist.

Das bedeutet, die Dichtungsvorrichtung kann in Axialrichtung variabel positioniert bzw. angeordnet werden, um auf diese Weise Toleranzen zwischen dem Verschlusskörperdichtelement und einem Verschlusskörper einer Kugelventilvorrichtung auszugleichen. Somit ermöglicht die erfindungsgemäße Dichtungsvorrichtung eine relativ freie Anordnung des Verschlusskörperdichtelements in axialer Richtung.

Durch den Aufbau der erfindungsgemäßen Dichtungsvorrichtung beeinflusst die axiale Bewegung der Dichtungsvorrichtung nicht die Dichtfunktion gegenüber einem Anschluss eines Gehäuses einer Kugelventilvorrichtung.

Die Dichtungsvorrichtung und insbesondere das Verschlusskörperdichtelement sind somit in verschiedenen axialen Positionen in einem Gehäuse einer Kugelventilvorrichtung anordbar.

Der erfindungsgemäßen Dichtungsvorrichtung liegt das Prinzip zugrunde, dass das Verschlusskörperdichtelement der Dichtungsvorrichtung von außen an einen Verschlusskörper bzw. an eine Kugel einer Kugelventilvorrichtung gedrückt wird, um diese zu montieren, ohne dass die Dichtungsvorrichtung selbst ventilseitig Mittel zur positionsgenauen axialen Positionierung aufweist bzw. frei von Mitteln zur axialen ortsfesten Positionierung ist.

Hierfür kann die erfindungsgemäße Montagevorrichtung mit einem Montagestößel vorgesehen sein. Ein solcher Montagestößel umfasst einen Aufnahmeabschnitt zum Aufnehmen der Dichtungsvorrichtung sowie zumindest einen axialen ersten Anschlagabschnitt zum axialen Positionieren der Dichtungsvorrichtung.

Eine solche Montagevorrichtung gibt somit die exakte Einbauposition der Dichtungsvorrichtung in einer Gehäuseeinrichtung einer Kugelventilvorrichtung vor. Der Montagestößel ist derart ausgebildet, dass er den ersten Anschlagabschnitt zum Anliegen an einem Verschlusskörper bzw. einer Kugel einer Kugelventilvorrichtung aufweist. Auf diese Weise ist sichergestellt, dass die Einbauposition der erfindungsgemäßen Dichtungsvorrichtung nicht von ortsfesten Parametern wie einem Gehäuse einer Kugelventilvorrichtung, sondern von der genauen Montageposition eines Verschlusskörpers einer Kugelventilvorrichtung abhängt.

Hierdurch wird sicher und zuverlässig gewährleistet, dass das Verschlusskörperdichtelement immer mit einem gleichen Anpressdruck am Verschlusskörper der Kugelventilvorrichtung abdichtend anliegt bzw. dass das Verschlusskörperdichtelement immer ein exakt definiertes gleiches Einbaumaß bezüglich eines Verschlusskörpers und nicht bezüglich eines Gehäuses aufweist.

An einer, der Ventilseite gegenüber liegenden Gehäuseseite der Dichtungsvorrichtung kann ein aus der Weichkomponente ausgebildetes optionales Toleranzausgleichselement zum Ausgleichen von Toleranzen zwischen dem Verschlusskörperdichtelement und einem Verschlusskörper einer Kugelventilvorrichtung angeordnet, wobei sich das Toleranzausgleichselement zumindest abschnittsweise in Axialrichtung erstreckt und einen distalen Endbereich der Gehäuseseite der Dichtungsvorrichtung ausbildet.

Das Toleranzausgleichselement verhindert bei der Montage der erfindungsgemäßen Dichtungsvorrichtung ein Ausweichen derselben in Axialrichtung weg vom Verschlusskörper einer Kugelventilvorrichtung.

Auf diese Weise ist ein axialer Längentoleranzausgleich eines Spiels eines Verschlusskörpers einer Kugelventilvorrichtung und insbesondere ein Ausgleich von Toleranzen zwischen dem Verschlusskörperdichtelement und einem Verschlusskörper einer Kugelventilvorrichtung möglich.

Das Toleranzausgleichselement unterstützt bzw. erhöht die vorstehend erläuterte technische Wirkung bzw. das technische Funktionsprinzip der erfindungsgemäßen Dichtungsvorrichtung.

Der Montagestößel der Montagevorrichtung kann einen zweiten Anschlagabschnitt zum Anliegen am Toleranzausgleichselement der Dichtungsvorrichtung aufweisen.

Das Radialdichtelement kann kreisringförmig ausgebildet sein und zumindest eine oder zwei oder drei oder mehr in Axialrichtung hintereinander angeordnete und sich in radialer Richtung nach außen erstreckende und radial umlaufend ausgebildete Dichtlippen aufweisen.

Dadurch, dass das Radialdichtelement mehrere radial umlaufende Dichtlippen aufweist, ist eine sichere und zuverlässige Abdichtung der Dichtungsvorrichtung gegenüber einem Gehäuse einer Kugelventilvorrichtung und somit auch eines Verschlusskörpers einer Kugelventilvorrichtung gegenüber einer Gehäuseeinrichtung möglich.

Die Gehäuseeinrichtung kann eine Rasteinrichtung zum Verbinden mit einem Gehäuse einer Kugelventilvorrichtung aufweisen.

Mittels der Rasteinrichtung lässt sich die Dichtungsvorrichtung auf einfache Weise mit einem Anschluss eines Gehäuses einer Kugelventilvorrichtung verbinden.

Weiterhin ist die Rasteinrichtung derart ausgebildet, dass diese eine Fixierung der Dichtungsvorrichtung in einem Anschluss eines Gehäuses einer Kugelventilvorrichtung ermöglicht ohne, dass dieser eine korrespondierend zur Rasteinrichtung ausgebildete Rasteinrichtungsaufnahme benötigt.

Im Folgenden werden technische Merkmale eines dritten Ausführungsbeispiels einer erfindungsgemäßen Dichtungsvorrichtung aufgezeigt. Diese technischen Merkmale sind jedoch nicht auf das dritte Ausführungsbeispiel beschränkt, sondern können beliebig mit den technischen Merkmalen der anderen Ausführungsbeispiele der erfindungsgemäßen Dichtungsvorrichtung kombiniert werden.

Hierbei kann vorgesehen sein, dass nur das Radialdichtelement zum Abdichten gegenüber einem Gehäuse einer Kugelventilvorrichtung vorgesehen ist.

Auf diese Weise wird eine in Axialrichtung freie Anordnung bzw. Positionierung der erfindungsgemäßen Dichtungsvorrichtung ermöglicht, da keine zusätzlichen Montageparameter in Axialrichtung erfüllt werden müssen, um ein abdichtendes Anliegen einer in Axialrichtung wirkenden Dichtung zum Abdichten gegenüber einem Gehäuse einer Kugelventilvorrichtung zu realisieren.

Die Rasteinrichtung kann flexible Rastarme mit daran angeformten und sich in radialer Richtung nach außen erstreckenden Rastelementen aufweisen.

Über die Rastelemente ist die erfindungsgemäße Dichtungsvorrichtung in einem Gehäuse einer Kugelventilvorrichtung fixierbar. Vorzugsweise weist ein entsprechendes Gehäuse einer Kugelventilvorrichtung keine korrespondierend zu den Rastelementen ausgebildeten Rastausnehmungen auf, so dass die Rastelemente zum Fixieren der Dichtungsvorrichtung auf einer glatten Oberfläche bzw. einer glatten inneren Mantelwandung eines Anschlusses eines Gehäuses einer Kugelventilvorrichtung ausgebildet sind.

Das Toleranzausgleichselement kann mehrere Toleranzausgleichsabschnitte aufweisen, die bereichsweise von Zinnenelementen der Gehäuseeinrichtung umgeben sind. Auf diese Weise sind an der Gehäuseseite radial umlaufend und beabstandet voneinander mehrere Toleranzausgleichsabschnitte zum gleichmäßigen Anliegen insbesondere an einem Montagestößel einer Montagevorrichtung vorgesehen.

Diese Toleranzausgleichsabschnitte ermöglichen eine gleichmäßige Beaufschlagung der Dichtungsvorrichtung mit einer in Axialrichtung wirkenden Montagekraft und ermöglichen insbesondere eine exakte Positionierung Dichtungsvorrichtung durch Anliegen *an dem zweiten Anschlagabschnitt des Montagestößels der Montagevorrichtung,* sodass das Verschlusskörperdichtelement abdichtend an einem Verschlusskörper einer Kugelventilvorrichtung anliegt. Dadurch ist die Dichtungsvorrichtung in einem vordefinierten Abstand zu einem Verschlusskörper einer Kugelventilvorrichtung anordbar.

In den Zinnenelementen der Gehäuseeinrichtung können vorzugsweise entsprechende Tauchkanäle für die aus der Weichkomponente ausgebildeten Toleranzausgleichsabschnitte des Toleranzausgleichselements ausgebildet sein.

Weiterhin können die Zinnenelemente mit den Toleranzausgleichsabschnitten alternierend mit den Rastarmen sowie radial umlaufend und gleich beabstandet voneinander an der Gehäuseseite der Dichtungsvorrichtung angeordnet sein.

Bei der erfindungsgemäßen Dichtungsvorrichtung gemäß dem ersten Ausführungsbeispiel kann insbesondere vorgesehen sein, dass die Dichtungsvorrichtung nur zum Durchströmen von der Ventilseite in Richtung der Gehäuseseite ausgebildet ist.

Im Folgenden werden nun technische Merkmale des vierten Ausführungsbeispiels der erfindungsgemäßen Dichtungsvorrichtung näher beschrieben. Diese sind ebenfalls beliebig mit den technischen Merkmalen der ersten drei Ausführungsbeispiels der erfindungsgemäßen Dichtungsvorrichtung kombinierbar.

Das Toleranzausgleichselement kann dabei kreisringförmig und radial umlaufend ausgebildet sein.

Das Toleranzausgleichselement ist gemäß diesem Ausführungsbeispiel ebenfalls an einer Gehäuseseite der Dichtungsvorrichtung angeordnet.

Die Dichtungsvorrichtung gemäß dem zweiten Ausführungsbeispiel kann insbesondere derart ausgebildet sein, dass lediglich eine Durchströmung der Dichtungsvorrichtung von der Gehäuseseite in Richtung Ventilseite vorgesehen ist.

Hierzu kann das Toleranzausgleichselement eine weitere Funktion übernehmen und gleichzeitig ein Axialdichtelement zum abdichtenden Anliegen an einem Gehäuse einer Kugelventilvorrichtung ausgebildet sein.

Gemäß dem zweiten Ausführungsbeispiel kann somit eine zusätzliche Abdichtung der Dichtungsvorrichtung gegenüber einem Gehäuse einer Kugelventilvorrichtung in Axialrichtung vorgesehen sein, um die Dichtwirkung der Dichtungsvorrichtung zu erhöhen.

Weiterhin kann die Rasteinrichtung als ein radial umlaufendes Flanschelement ausgebildet sein, wobei an dem Flanschelement, insbesondere radial umlaufend und gleich beabstandet voneinander, sich in radialer Richtung nach außen erstreckende Rastelemente angeformt sind.

Die technische Wirkung der Rastelemente entspricht analog der technischen Wirkung der vorstehend erläuterten Rastelemente.

Weiterhin kann das Flanschelement einen Anschlag zum Anliegen an einem Gehäuse einer Kugelventilvorrichtung ausbilden.

Somit weist die erfindungsgemäße Dichtungsvorrichtung hinsichtlich der freien bzw. variablen Anordnung in einem Gehäuse einer Kugelventilvorrichtung dieselben technischen Merkmale wie die Dichtungsvorrichtung gemäß dem ersten Ausführungsbeispiel auf, jedoch können zusätzlich, wie vorstehend aufgezeigt, ein Axialdichtelement sowie ein einen Anschlag ausbildendes Flanschelement vorgesehen sein, wobei durch diese technischen Merkmale die Möglichkeit der freien axialen Positionierung geringfügig eingeschränkt ist.

Im Folgenden werden weitere technische Merkmale der erfindungsgemäßen Dichtungsvorrichtung aufgezeigt, die sowohl bei der Dichtungsvorrichtung gemäß dem ersten Ausführungsbeispiel als auch bei der Dichtungsvorrichtung gemäß dem zweiten Ausführungsbeispiel vorgesehen sein können.

Die Gehäuseeinrichtung kann im Bereich der Dichteinrichtung, insbesondere im Bereich des Radialdichtelements hinterschnittartig ausgebildet sein, wobei das Radialdichtelement in diesem Bereich entsprechend korrespondierend ausgebildete Abschnitte aufweist, um die Dichteinrichtung bzw. die Weichkomponente sicher und zuverlässig mit der Gehäuseeinrichtung bzw. der Hartkomponente zu verbinden.

Die Rastelemente können halbkugelförmig ausgebildet sein.

Die Hartkomponente kann vorzugsweise aus Polypropylenstyrol (PPS) oder aus Polyphthalamid (PPA) und die Weichkomponente kann vorzugsweise aus einem Elastomer ausgebildet sein.

Weiterhin ist erfindungsgemäß ein Verfahren zur Herstellung einer vorstehend aufgezeigten Dichtungsvorrichtung vorgesehen, wobei die Dichtungsvorrichtung mittels eines 2-Komponenten Spritzgießverfahrens hergestellt ist.

Das dritte und das vierte Ausführungsbeispiel können auch ohne ein Toleranzausgleichselement ausgebildet werde. Dies ist demnach nur optional vorgesehen.

Die technischen Merkmale der vorliegenden Erfindung sind sofern technisch sinnvoll und möglich beliebig miteinander kombinierbar.

Die vorliegende Erfindung wird im Folgenden anhand von vier in den Figuren dargestellten Ausführungsbeispielen näher beschrieben. Diese zeigen in:
Figur 1 eine schematische seitlich geschnittene Darstellung eines erfindungsgemäßen Montagestößels und einer erfindungsgemäßen Dichtungsvorrichtung, jeweils gemäß einem ersten Ausführungsbeispiel in einer Endmontageposition,
Figur 2 eine schematische seitlich geschnittene Darstellung einer erfindungsgemäßen Dichtungsvorrichtung und eines erfindungsgemäßen Montagestößels, jeweils gemäß einem zweiten Ausführungsbeispiel.
Figur 3 eine perspektivische Darstellung einer erfindungsgemäßen Dichtungsvorrichtung gemäß einem dritten Ausführungsbeispiel,
Figur 4 eine Draufsicht auf eine Gehäuseseite der Dichtungsvorrichtung aus Figur 1,
Figur 5 die Dichtungsvorrichtung aus Figur 4 geschnitten entlang der Linie A-A,
Figur 6 eine schematische seitliche Darstellung der Dichtungsvorrichtung in einem in einem Gehäuse einer Kugelventilvorrichtung eingebauten Zustand mit einem Abschnitt einer entsprechenden Montagevorrichtung,
Figur 7 eine perspektivische seitlich geschnittene Detailansicht aus Figur 5,
Figur 8 eine Seitenansicht einer Gehäuseeinrichtung der Dichtungsvorrichtung,
Figur 9 eine seitlich geschnittene Darstellung der Gehäuseeinrichtung aus Figur 8 geschnitten entlang der Linie C-C,
Figur 10 eine Schnittdarstellung der Gehäuseeinrichtung aus Figur 8 geschnitten entlang der Linie D-D,
Figur 11 eine seitlich geschnittene Darstellung einer erfindungsgemäßen Dichtungsvorrichtung gemäß einem vierten Ausführungsbeispiel,
Figur 12 eine Draufsicht von einer Gehäuseseite auf die Dichtungsvorrichtung aus Figur 11,
Figur 13 eine seitlich geschnittene Detailansicht der Dichtungsvorrichtung aus Figur 11,
Figur 14 eine schematische seitliche Darstellung der Dichtungsvorrichtung in einem in einem Gehäuse einer Kugelventilvorrichtung eingebauten Zustand mit einem Abschnitt eines entsprechenden Montagewerkzeugs,
Figur 15 eine Seitenansicht der Gehäuseeinrichtung der Dichtungsvorrichtung,
Figur 16 eine Schnittansicht der Gehäuseeinrichtung aus Figur 15 geschnitten entlang der Linie D-D und
Figur 17 eine Schnittdetailansicht von der Gehäuseeinrichtung aus Figur 15, geschnitten entlang der Linie B-B.

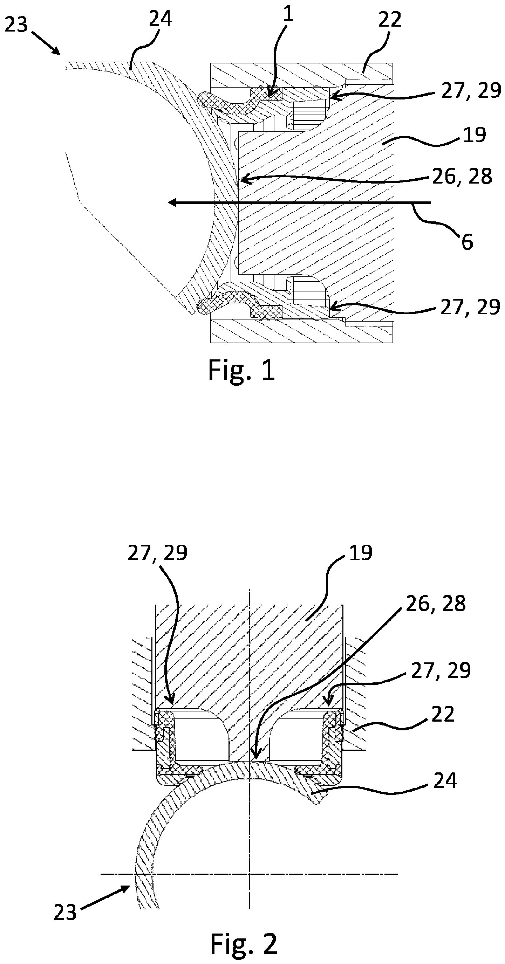

Im Folgenden werden eine erfindungsgemäße Montagevorrichtung (nicht dargestellt) mit einem erfindungsgemäßen Montagestößel 19 und eine erfindungsgemäße Dichtungsvorrichtung 1 gemäß einem ersten und einem zweiten Ausführungsbeispiel näher beschrieben (Figuren 1 und 2).

Die nicht näher beschriebene erfindungsgemäße Montagevorrichtung kann einen Roboterarm oder eine sonstige mechanische Montageeinrichtung umfassen, mit der es möglich ist, den damit verbundenen erfindungsgemäßen Montagestößel 19 in einem Gehäuse 22 einer Kugelventilvorrichtung 23 anzuordnen und mit einer in Axialrichtung 6 wirkenden Kraft zu beaufschlagen.

Der erfindungsgemäßen Montagestößel 19 ist als rotationssymmetrischer zylindrischer Körper ausgebildet und weist an einem in Axialrichtung 6 vorne liegenden freien Ende eine sich orthogonal zur Axialrichtung 6 erstreckende Verschlusskörperanschlagfläche 26 zum axialen Anliegen an einem Verschlusskörper 24 einer Kugelventilvorrichtung auf.

Die Verschlusskörperanschlagfläche ist insbesondere eine kreisscheibenförmige Fläche, die zentral am Montagestößel 19 angeordnet ist.

In Axialrichtung 6 zurückversetzt zur Verschlusskörperanschlagfläche ist eine kreisringförmige Dichtungsanschlagfläche 27 ausgebildet.

Die Dichtungsanschlagfläche 27 ist insbesondere an einem radialen Randbereich des Montagestößels 19 angeordnet.

Ein an einem Verschlusskörper 24 ausgebildeter Abschnitt, an dem die Verschlusskörperanschlagfläche in einer Endmontageposition 25 anschlägt, wird im Folgenden als zweite Anschlagfläche 28 bezeichnet.

Ein entsprechender Abschnitt einer Gehäuseeinrichtung 4, die aus einer Hartkomponente ausgebildet ist der Dichtungsvorrichtung 1, an dem die Dichtungsanschlagfläche 27 anschlägt, wird im Folgenden als erste Anschlagfläche 29 bezeichnet.

Weiterhin ist erfindungsgemäß ein Verfahren zur Montage einer Dichtungsvorrichtung mit einem Montagesystem für eine Dichtungsvorrichtung einer Kugelventilvorrichtung, wie vorstehend beschrieben, vorgesehen. Dieses Verfahren umfasst die folgenden Schritte:
Anordnen einer Dichtungsvorrichtung in einem Gehäuse einer Kugelventilvorrichtung, Anordnen eines Montagestößel einer Montagvorrichtung an einer Gehäuseseite der Dichteinrichtung,
Kontaktieren einer Dichtungsanschlagfläche an einer in etwa korrespondierend ausgebildeten ersten Anschlagfläche der Dichteinrichtung durch Beaufschlagen des Montagestößel mit einer in Axialrichtung wirkenden Kraft,
Beaufschlagen des Montagestößels mit einer in Axialrichtung wirkenden Kraft bis eine Verschlusskörperanschlagfläche an einer Oberfläche eines Verschlusskörpers der Kugelventilvorrichtung anschlägt, wobei dieser Abschnitt des Verschlusskörpers als zweite Anschlagfläche bezeichnet wird, und wobei in diesem Moment der Montagestößel nicht mehr mit einer in Axialrichtung wirkenden Kraft beaufschlagt wird, und wobei dabei eine Endmontageposition der Dichteinrichtung erreicht ist.

Insbesondere kann vorgesehen sein, dass die Dichtungsvorrichtung zunächst auf einem Aufnahmeabschnitt des Montagestößels angeordnet wird, bevor diese in ein Gehäuse einer Kugelventilvorrichtung eingebracht wird.

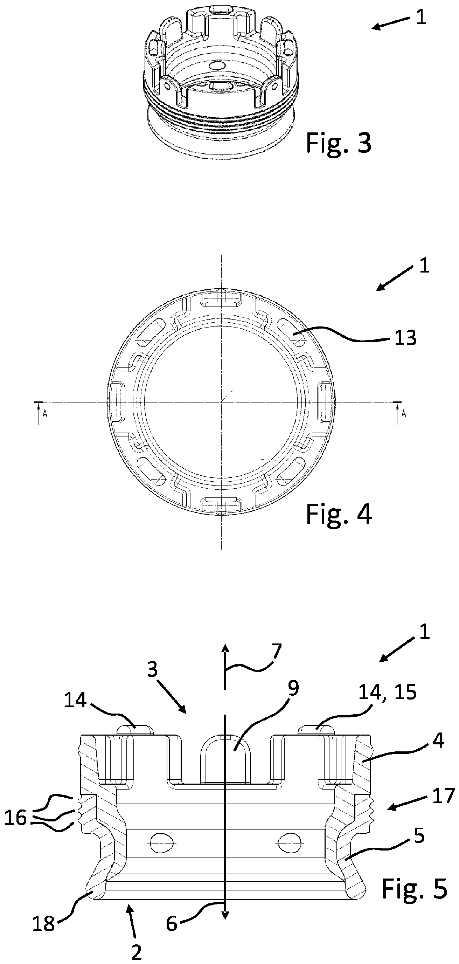

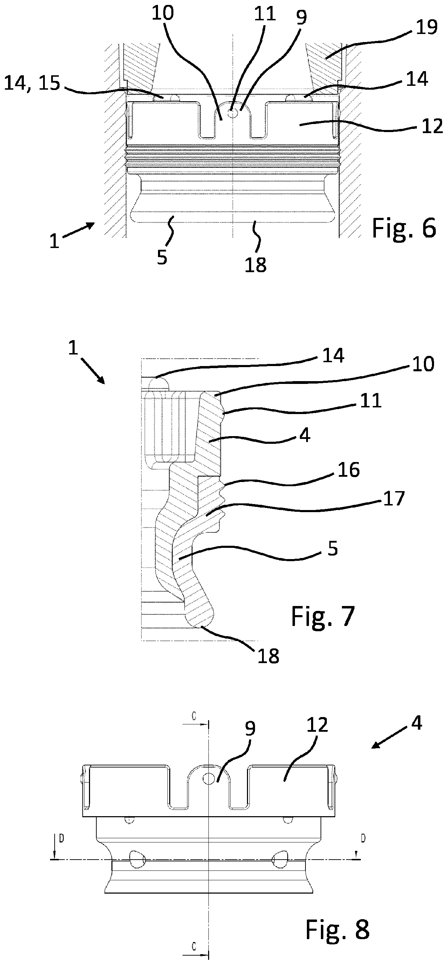

Im Folgenden wird eine erfindungsgemäße Dichtungsvorrichtung 1 für eine Kugelventilvorrichtung (nicht dargestellt) anhand eines dritten Ausführungsbeispiels näher beschrieben (Figuren 3 bis 11).

Die Dichtungsvorrichtung 1 weist eine in Richtung eines Verschlusskörpers (nicht dargestellt) einer Kugelventilvorrichtung weisende Ventilseite 2 und eine in Richtung eines Anschlusses (nicht dargestellt) eines Gehäuses (nicht dargestellt) einer Kugelventilvorrichtung weisende Gehäuseseite 3 auf.

Zudem umfasst die Dichtungsvorrichtung 1 eine Gehäuseeinrichtung 4, die aus einer Hartkomponente ausgebildet ist, und eine Dichteinrichtung 5, die aus einer Weichkomponente ausgebildet ist, auf. Die Gehäuseeinrichtung 4 ist aus PPA oder aus PPS ausgebildet. Die Dichteinrichtung 5 ist aus einem Elastomer ausgebildet.

Die Dichtungsvorrichtung 1 erstreckt sich in einer Axialrichtung 6 und ist zum Durchströmen von der Ventilseite 2 in Richtung der Gehäuseseite 3 in einer Durchströmungsrichtung 7 vorgesehen.

Weiterhin ist die Gehäuseeinrichtung 4 in etwa rohrförmig ausgebildet und begrenzt eine Durchgangsöffnung 8.

An einem freien Ende der Gehäuseseite 3 ist eine Rasteinrichtung 9 angeordnet.

Die Rasteinrichtung 9 umfasst radial umlaufend und gleich beabstandet voneinander angeordnete und sich in Axialrichtung 6 erstreckende flexible Rastarme 10, an denen sich in radialer Richtung nach außen erstreckende und halbkreisförmig ausgebildete Rastelemente 11 angeformt sind.

Im Bereich zwischen den Rastarmen 10 und alternierend zu diesen sind, radial umlaufend und gleich beabstandet voneinander, sich in Axialrichtung 6 erstreckende Zinnenelemente 12 angeformt.

Die Zinnenelemente 12 sind in einer Draufsicht in etwa T-förmig ausgebildet und weisen einen sich in Axialrichtung 6 erstreckenden Tauchkanal 13 auf. Der Tauchkanal 13 ist zur Aufnahme von Toleranzausgleichsabschnitten 14 eines Toleranzausgleichselements 15 vorgesehen.

Die Gehäuseseite 3 der Dichtungsvorrichtung 1 ist in radialer Richtung nach außen durch die Rastarme 10 und die Zinnenelemente 12 begrenzt.

Im Bereich der Ventilseite 2 ist die Dichtungsvorrichtung 1 in radialer Richtung nach außen durch die Dichteinrichtung 5 begrenzt.

An der Dichteinrichtung 5 sind in Axialrichtung 6 in etwa mittig, radial umlaufend und gleich beabstandet voneinander, drei sich in radialer Richtung nach außen erstreckende Dichtlippen 16 angeformt. Diese Dichtlippen 16 bilden ein Radialdichtelement 17 zum abdichtenden Anliegen an einem Anschluss eines Gehäuses einer Kugelventilvorrichtung aus.

Zudem bildet die Dichteinrichtung 5 im Bereich der Ventilseite 2 ein radial umlaufendes und sich in Axialrichtung 6 erstreckendes Verschlusskörperdichtelement 18 aus. Das Verschlusskörperdichtelement 18 ist zum abdichtenden Anliegen an einem Verschlusskörper einer Kugelventilvorrichtung ausgebildet.

Die aus der Weichkomponente ausgebildete Dichteinrichtung 5 erstreckt sich in Axialrichtung 6 bzw. in Durchströmungsrichtung 7 durch die Tauchkanäle 13 der Zinnenelemente 12 derart hindurch, dass an der Gehäuseseite 3 die Toleranzausgleichsabschnitte 14, die sich orthogonal zur Axialrichtung 6 erstrecken, ausgebildet werden. Diese Toleranzausgleichsabschnitte 14 bilden ein Toleranzausgleichselement 15 aus, welches einen distalen Endbereich der Gehäuseseite 3 der Dichtungsvorrichtung 1 darstellt.

Eine solche erfindungsgemäße Dichtungsvorrichtung 1 gemäß dem drittem Ausführungsbeispiel ist mittels der Montagevorrichtung (nicht dargestellt) in einem Gehäuse einer Kugelventilvorrichtung anordbar. Die Montagevorrichtung weist dabei einen korrespondierend zur baulichen Ausgestaltung der Dichtungsvorrichtung 1 ausgebildeten Montagestößel 19 auf, der einen ersten Anschlagabschnitt zum Anschlagen an einem Verschlusskörper einer Kugelventilvorrichtung aufweist. An einem diesem Anschlagabschnitt gegenüberliegenden Ende des Montagestößels ist ein zweiter Anschlagabschnitt ausgebildet, an dem das Toleranzausgleichselement 15 bzw. die Toleranzausgleichsabschnitte 14 entsprechend anliegen.

Gemäß dem dritten Ausführungsbeispiel ist vorzugsweise vorgesehen, dass die Dichtungsvorrichtung 1 lediglich das Radialdichtelement 17 zum Abdichten gegenüber einem Gehäuse einer Kugelventilvorrichtung aufweist.

Gemäß einem erfindungsgemäßen Montageverfahren ist vorgesehen, dass die Dichtungsvorrichtung 1 zunächst auf dem Montagestößel 19 der Montagevorrichtung angeordnet wird. Anschließend wird die Dichtungsvorrichtung mit dem Montagestößel in einen Anschluss einer Kugelventilvorrichtung in Richtung eines Verschlusskörpers der Kugelventilvorrichtung bewegt, bis der erste Anschlagabschnitt des Montagestößels am Verschlusskörper anschlägt. Das Toleranzausgleichselement 15 der Dichtungsvorrichtung liegt dabei an dem zweiten Anschlagabschnitt des Montagestößels an.

Durch das Toleranzausgleichselement 15 ist eine gewisse Einbautoleranz des Verschlusskörpers bzw. eine Toleranz zwischen dem Verschlusskörperdichtelement und einem Verschlusskörper der Kugelventilvorrichtung ausgleichbar.

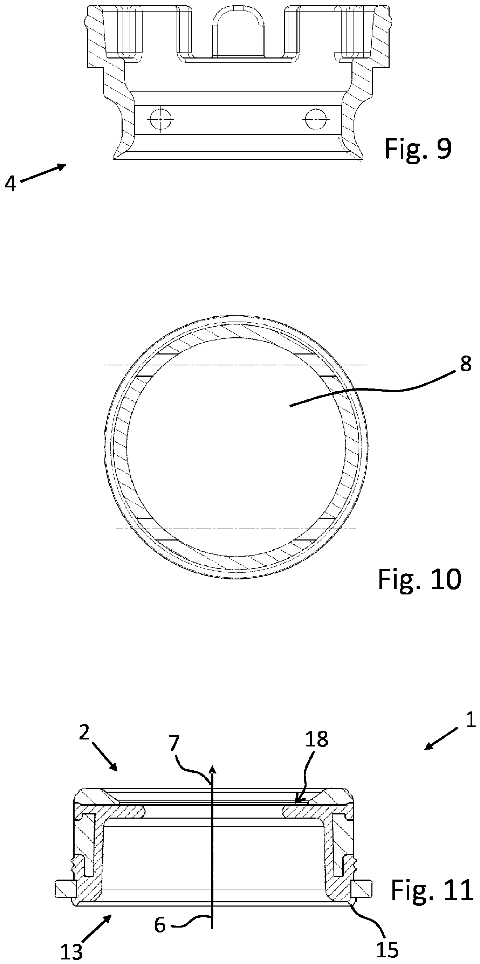

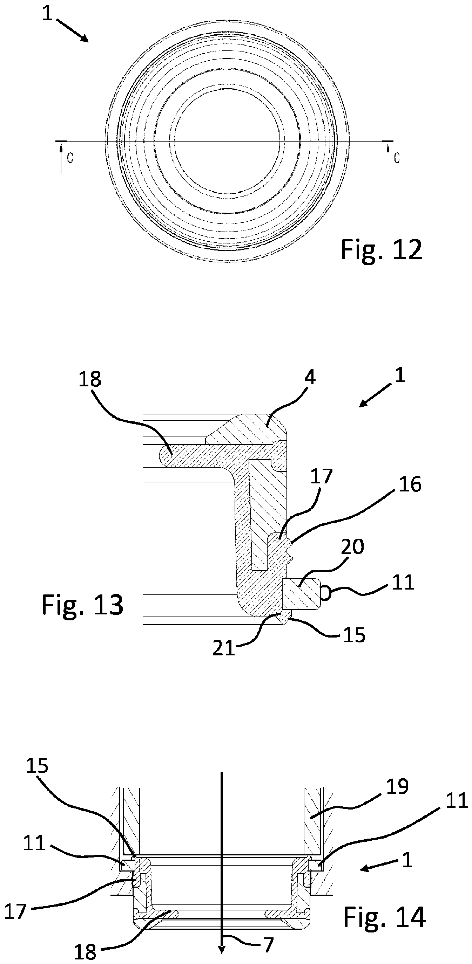

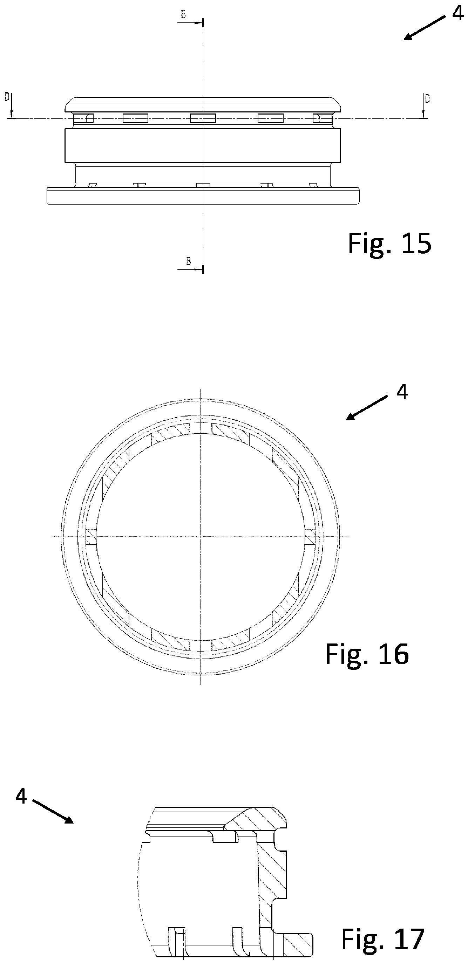

Im Folgenden wird eine erfindungsgemäße Dichtungsvorrichtung 1 gemäß einem vierten Ausführungsbeispiel näher beschrieben (Figuren 11 bis 16).

Sofern nichts anderes beschrieben ist, weist die Dichtungsvorrichtung 1 gemäß dem vierten Ausführungsbeispiel dieselben technischen Merkmale auf wie die Dichtungsvorrichtung 1 gemäß dem dritten Ausführungsbeispiel. Gleiche technische Merkmale sind dabei mit den gleichen Bezugszeichen versehen.

Die Dichtungsvorrichtung 1 gemäß dem vierten Ausführungsbeispiel ist vorzugsweise zum Durchströmen von einer von der Gehäuseseite 3 in Richtung der Ventilseite 2 ausgebildet. Somit erfolgt die Durchströmungsrichtung 7 in entgegengesetzter Richtung gegenüber dem ersten Ausführungsbeispiel.

Die rohrförmig ausgebildete Gehäuseeinrichtung 4 bildet im Bereich der Ventilseite 2 den Abschluss der Dichtungsvorrichtung 1, der somit aus einer Hartkomponente vorgesehen ist, aus. Im Bereich der Gehäuseseite 3 weist die Gehäuseeinrichtung 4 einen radial umlaufenden Flanschabschnitt 20 auf.

An den Flanschabschnitt 20 sind, radial umlaufend und gleich beabstandet voneinander, sich in radialer Richtung nach außen erstreckende halbkugelförmige Rastelemente 11 der Rasteinrichtung 9 angeformt.

Der Flanschabschnitt 20 kann gemäß einer vorteilhaften Weiterbildung als Anschlagelement zum Anschlagen an dem Montagestößel 19 der Montagevorrichtung und/oder an einem entsprechend korrespondierend ausgebildeten Abschnitt eines Gehäuses einer Kugelventilvorrichtung ausgebildet sein.

Benachbart zum Flanschabschnitts 20 ist das Radialdichtelement 17 der Dichteinrichtung 5 angeordnet. Das Radialdichtelement 17 weist gemäß diesem Ausführungsbeispiel analog zum ersten Ausführungsbeispiel zwei radial umlaufende und in Axialrichtung nebeneinander und sich in radialer Richtung nach außen erstreckende Dichtlippen 16 auf.

An der Gehäuseseite 3 kann ein sich in Axialrichtung 6 bzw. entgegen der Durchströmungsrichtung 7 erstreckendes radial umlaufendes Axialdichtelement 21 angeformt sein. Das Axialdichtelement 21 kann gemäß einer Ausführungsform zum abdichtenden Anliegen an einem Abschnitt eines Gehäuses einer Kugelventilvorrichtung ausgebildet sein.

Gemäß einer alternativen Ausführungsform kann das Axialdichtelement ein radial umlaufendes und sich in Axialrichtung 6 erstreckendes durchgängig ausgebildetes Toleranzausgleichselement 15 ausbilden.

Gemäß einer weiteren Ausführungsform kann dieses Toleranzausgleichselement 15 bzw. das Axialdichtelement 21 sowohl die Aufgaben des Toleranzausgleichselements 15 als auch des Axialdichtelements 21 erfüllen bzw. übernehmen.

Im Bereich der Ventilseite 2 ist das Verschlusskörperdichtelement 18 in Axialrichtung gegenüber der Hartkomponente der Gehäuseeinrichtung 4 zurückversetzt.

Das Verschlusskörperdichtelement 18 erstreckt sich gemäß diesem Ausführungsbeispiel in radialer Richtung nach innen orthogonal zur Axialrichtung 6 bzw. zur Durchströmungsrichtung 7.

Die Montagevorrichtung 19 weist einen Montagestößel auf, der korrespondierend zur baulichen Ausgestaltung der Dichtungsvorrichtung 1 gemäß dem zweiten Ausführungsbeispiel ausgebildet ist.

Vorzugsweise weist dabei die Dichtungsvorrichtung 1 das Toleranzausgleichselement 15 auf.

Die technischen Merkmale der erfindungsgemäßen Dichtungsvorrichtung 1 gemäß dem ersten und dem zweiten Ausführungsbeispiel können beliebig miteinander kombiniert werden, solange dies technisch möglich und sinnvoll ist.

Zudem kann auch vorgesehen sein, die Dichtungsvorrichtung 1 gemäß beiden Ausführungsbeispiel entgegen der bevorzugten Durchströmungsrichtung 7 zu durchströmen bzw. zu verwenden.

Ein entsprechendes Verfahren zur Montage erfolgt analog zu dem anhand des ersten Ausführungsbeispiels beschriebenen Montageverfahren.

Weiterhin ist erfindungsgemäß ein Verfahren zur Herstellung der vorstehend genannten Dichtungsvorrichtungen vorgesehen, bei dem die Dichtungsvorrichtung 1 mittels eines 2-Komponenten-Spritzgießverfahrens hergestellt ist.

### Bezuaszeichenliste

- 1: Dichtungsvorrichtung
- 2: Ventilseite
- 3: Gehäuseseite
- 4: Gehäuseeinrichtung
- 5: Dichteinrichtung
- 6: Axialrichtung
- 7: Durchströmungsrichtung
- 8: Durchgangsöffnung
- 9: Rasteinrichtung
- 10: Rastarm
- 11: Rastelement
- 12: Zinnenelement
- 13: Tauchkanal
- 14: Toleranzausgleichsabschnitt
- 15: Toleranzausgleichselement
- 16: Dichtlippe
- 17: Radialdichtelement
- 18: Verschlusskörperdichtelement
- 19: Montagestößel
- 20: Flanschabschnitt
- 21: Axialdichtelement
- 22: Gehäuse
- 23: Kugelventilvorrichtung
- 24: Verschlusskörper
- 25: Endmontageposition
- 26: Verschlusskörperanschlagfläche
- 27: Dichtungsanschlagfläche
- 28: zweite Anschlagfläche
- 29: erste Anschlagfläche

## Patentansprüche

1. Montagesystem für eine Dichtungsvorrichtung (1) einer Kugelventilvorrichtung (23) umfassend
eine Dichtungsvorrichtung (1), wobei die Dichtungsvorrichtung (1) eine Gehäuseeinrichtung (4) aus einer Hartkomponente, und eine Dichteinrichtung (5) aus einer Weichkomponente aufweist,
eine Montagevorrichtung mit einem sich in einer Axialrichtung (6) erstreckenden Montagestößel (19), wobei der Montagestößel (19) eine Verschlusskörperanschlagfläche (26) zum Anliegen an einem Verschlussköper (24) einer Kugelventilvorrichtung (23) und eine Dichtungsanschlagfläche (27) zum Anliegen an der Dichtungsvorrichtung (1) aufweist, sodass die Dichtungsvorrichtung (1) in einem vorbestimmten Abstand zu einem Verschlusskörper (24) anordbar ist.

2. Montagesystem gemäß Anspruch 1,
**dadurch gekennzeichnet,**
**dass** sich die Dichtungsanschlagfläche (27) orthogonal zur Axialrichtung (6) erstreckt und als eine tangential umlaufende kreisringförmige Fläche ausgebildet ist, die an einem Randbereich des Montagestößels (19) angeordnet ist

3. Montagesystem gemäß Anspruch 1 oder 2,
**dadurch gekennzeichnet,**
**dass** sich die Verschlusskörperanschlagfläche (26) orthogonal zur Axialrichtung (6) erstreckt und als eine kreisscheibenförmige Fläche ausgebildet ist, die zentral am Montagestößels (19) angeordnet ist.

4. Montagesystem gemäß einem der Ansprüche 1 bis 3,
**dadurch gekennzeichnet,**
**dass** die Verschlusskörperanschlagfläche (26) ein freies Ende des Montagestößels (19) in Axialrichtung (6) bildet und die Dichtungsanschlagfläche (27) gegenüber der Verschlusskörperanschlagfläche (26) in Axialrichtung (6) zurückversetzt ist.

5. Montagesystem gemäß einem der Ansprüche 1 bis 4,
**dadurch gekennzeichnet,**
**dass** der Montagestößel (19) einen Aufnahmeabschnitt zum Aufnehmen der Dichtungsvorrichtung (1) aufweist.

6. Montagesystem gemäß einem der Ansprüche 1 bis 5,
**dadurch gekennzeichnet,**
**dass** die Dichteinrichtung (5) weiterhin umfasst
ein an einer Ventilseite (2) der Dichteinrichtung (5) angeordnetes Verschlusskörperdichtelement (18) zum abdichtenden Anliegen an einem Verschlusskörper (24) einer Kugelventilvorrichtung (23), und
ein sich in radialer und/oder in axialer Richtung erstreckendes Axial- und/oder Radialdichtelement (17) zum Abdichten gegenüber einem Gehäuse (22) einer Kugelventilvorrichtung (23).

7. Dichtungsvorrichtung (1) vorzugsweise zur Montage mit einem Montagesystem gemäß einem der Ansprüche 1 bis 6, umfassend
eine Dichtungsvorrichtung (1), wobei die Dichtungsvorrichtung (1) eine Gehäuseeinrichtung (4) aus einer Hartkomponente, und eine Dichteinrichtung (5) aus einer Weichkomponente aufweist,
ein an einer Ventilseite (2) der Dichteinrichtung (5) angeordnetes Verschlusskörperdichtelement (18) zum abdichtenden Anliegen an einem Verschlusskörper (24) einer Kugelventilvorrichtung (23), und
ein sich in radialer und/oder in axialer Richtung erstreckendes Axial- und/oder Radialdichtelement (17) zum Abdichten gegenüber einem Gehäuse (22) einer Kugelventilvorrichtung (23).

8. Verfahren zur Montage einer Dichtungsvorrichtung (1) mit einem Montagesystem für eine Dichtungsvorrichtung (1) einer Kugelventilvorrichtung (23) gemäß einem der Ansprüche 1 bis 7 umfassend die folgenden Schritte
- Anordnen einer Dichtungsvorrichtung (1) in einem Gehäuse einer Kugelventilvorrichtung (23),
- Anordnen eines Montagstößels (19) einer Montagvorrichtung an einer Gehäuseseite (3) der Dichteinrichtung (5),
- Kontaktieren einer Dichtungsanschlagfläche (27) an einer in etwa korrespondierend ausgebildeten ersten Anschlagfläche (29) der Dichteinrichtung (5) durch Beaufschlagen des Montagestößels (19) mit einer in Axialrichtung (6) wirkenden Kraft,
- Beaufschlagen des Montagestößels (19) mit einer in Axialrichtung (6) wirkenden Kraft, bis eine Verschlusskörperanschlagfläche (26) an einer Oberfläche eines Verschlusskörpers (24) der Kugelventilvorrichtung (23) anschlägt, wobei dieser Abschnitt des Verschlusskörpers (24) als zweite Anschlagfläche (28) bezeichnet wird, und wobei in diesem Moment der Montagestößel (19) nicht mehr mit einer in Axialrichtung (6) wirkenden Kraft beaufschlagt wird, und wobei eine Endmontageposition (25) der Dichteinrichtung (5) erreicht ist.

9. Verfahren gemäß Anspruch 8, weiterhin umfassend einen vor den vorstehenden Schritten vorgesehenen Schritt
- Anordnen der Dichtungsvorrichtung (1) auf einem Aufnahmeabschnitt des Montagestößels (19).

10. Verfahren zur Herstellung einer Dichtungsvorrichtung (1) gemäß Anspruch 8, wobei die Dichtungsvorrichtung (1) mittels eines 2-Komponenten Spritzgießverfahrens hergestellt ist.
